# EUROPÄISCHE PATENTSCHRIFT

(11) **EP 1 916 072 B1**
(45) Veröffentlichungstag und Bekanntmachung des Hinweises auf die Patenterteilung: **19.12.2018**
(21) Anmeldenummer: 07020471.4
(22) Anmeldetag: 19.10.2007
(51) Int. Cl.: B25J 17/02, B21D 5/02, B21D 43/10, B25J 15/00

(54) **Handhabungsvorrichtung und Fertigungseinrichtung**
Manipulating device and production system
Dispositif de manipulation et système de fabrication

(30) Priorität: 23.10.2006 AT 17732006
(43) Veröffentlichungstag der Anmeldung: 30.04.2008
(73) Patentinhaber: TRUMPF Maschinen Austria GmbH & Co. KG., 4061 Pasching (AT)
(72) Erfinder: Denkmeier, Thomas, 4050 Traun (AT); Fischereder, Bernhard, 4901 Ottnang am Hausruck (AT)
(74) Vertreter: Burger, Hannes

(56) Entgegenhaltungen:
- EP-A- 0 354 559
- WO-A-03/095125
- DE-A1-102004 048 036
- JP-A- 6 262 576
- JP-A- 6 344 033
- JP-A- 7 214 174
- JP-A- 60 242 947
- US-B1- 6 722 178

## Beschreibung

Die Erfindung betrifft eine Handhabungsvorrichtung, wie im Oberbegriff des Anspruches 1 beschrieben, sowie eine Fertigungseinrichtung, wie im Oberbegriff des Anspruchs 20 beschrieben.

Aus der Patentschrift EP 1 503 874 derselben Anmelderin ist bereits eine Fertigungseinrichtung umfassend eine Biegepresse sowie eine Handhabungseinrichtung für das Positionieren von zu biegenden Werkstücken bekannt. Die Handhabungseinrichtung ist dabei als Schwenkarmanordnung ausgebildet und weist an einem Endbereich der Schwenkarmanordnung eine Dreheinrichtung mit einer zu den Schwenkachsen der Schwenkarmanordnung senkrecht verlaufenden Drehachse auf. An dieser Dreheinrichtung ist eine Greifeinrichtung für das Ergreifen der an der Biegepresse zu biegenden Werkstücke angeordnet. Insbesondere bei kleinen Werkstücken, an denen Biegekanten in verschiedenen Richtungen anzubringen sind, ist es bei einer derart ausgeführten Handhabungsvorrichtung erforderlich, zwischen den einzelnen Biegevorgängen das Werkstück mit der Greifvorrichtung an verschiedenen Greifpositionen zu erfassen, da durch die Geometrie der Schwenkarmanordnung und der Dreheinrichtung bedingte Kollisionen mit der Biegepresse anders nicht zu vermeiden wären. Diese Umgreifvorgänge gehen natürlich zu Lasten der produktiven Bearbeitungszeit und erhöhen durch die längere Maschinenbelegungszeit die Herstellkosten derartiger Werkstücke. Da bei jedem Umgreifvorgang auch das Risiko besteht, dass Positionierfehler auftreten, kann dadurch auch die Werkstückgenauigkeit insgesamt darunter leiden, was durch möglichen Ausschuss, Nacharbeit oder Reklamationen ebenfalls den wirtschaftlichen Einsatz einer derartigen Handhabungsvorrichtung negativ beeinträchtigen kann.

Weiters beschreibt DE 10 2004 048036 A1 eine Biegevorrichtung und eine Handhabungsvorrichtung mit einem Drehkopf, bei der eine Greifzone der Handhabungsvorrichtung mittels einer dem Drehkopf nachgeordneten linearen Positionierachse verschiebbar ist.

Ausgehend von diesem Stand der Technik, ist es Aufgabe der Erfindung die bekannte Handhabungsvorrichtung für die Verwendung mit einer Biegepresse zu verbessern und dadurch die automatische Positionierung von Werkstücken in einer Fertigungseinrichtung mit einer Biegepresse auf ein größeres Werkstückspektrum zu erweitern und die Leistungsfähigkeit einer derartigen Fertigungseinrichtung zu verbessern.

Diese Aufgabe der Erfindung wird durch die in Anspruch 1 und Anspruch 20 wiedergegebenen Merkmale erreicht.
Der große Vorteil der Kombination eines Auslegerelements, welches das Werkstück in einen Abstand zur vom Drehkopf bewirkten Störkontur der bekannten Handhabungsvorrichtung bringt, mit einer Verstelleinrichtung, die das Werkstück in Bezug auf das Auslegerelement in seiner Position und/oder seiner Winkellage verändern kann, besteht zu einen darin, dass dadurch auch in verschiedene Richtungen orientierte Biegekanten an kleineren Werkstücken bis in die Biegeebene positioniert werden können, und dadurch das Spektrum der bearbeitbaren Werkstücke insgesamt größer wird. Zum anderen wird die Bearbeitungszeit für Werkstücke mit mehreren Biegekanten, die insbesondere in zueinander nicht parallelen Richtungen verlaufen deutlich gesenkt, da zeitraubende Umgreifvorgänge vielfach entfallen können. Die verbesserte Bearbeitungsmöglichkeit von kleinen Werkstücken an mehreren Biegekanten wird dabei umso flexibler, je kleiner die Störkontur des Auslegerelements zusammen mit der Greifvorrichtung ist. Durch diese zusätzlichen Bearbeitungsmöglichkeiten erweitert sich auch der wirtschaftlich sinnvolle Einsatzbereich einer durch eine Handhabungseinrichtung automatisierten Biegepresse. Die Verstelleinrichtung umfasst dabei einen Verstellantrieb, der die für die Verstellbewegung erforderlichen Kräfte bzw. Momente aufbringt.

Die Verstelleinrichtung umfasst als Verstellantrieb einen Linearantrieb zum Verschieben der Greifvorrichtung entlang einer Linearführung am Auslegerelement. Durch einen derartigen Linearantrieb, der konstruktiv einfach aufgebaut sein kann, können ebenfalls die Position oder die Winkellage eines Werkstücks einfach bezüglich des Auslegerelements verändert wer-den, um Umgreifvorgänge einzusparen.
Zusätzlich liegen die Linearführung und damit auch die Verschieberichtung der Greifvorrichtung in einer zur Drehachse rechtwinkeligen Ebene, wodurch die Linearführung konstruktiv einfach parallel zur Auslegerlängsachse am Auslegerelement angeordnet sein kann.

Eine Ausführungsform der Handhabungsvorrichtung besteht darin, dass eine Auslegerlängsachse des Auslegerelements die Drehachse schneidet, die Greifvorrichtung also im Wesentlichen radial gegenüber der Drehachse versetzt ist. Bei Greifelementen, die ein Werkstück lediglich an einer Fläche aufnehmen, wie z.B. Vakuumsaugelemente oder Magnetgreifelemente kann dadurch die Greifzone und deren Mitte ebenfalls etwa in der von Drehachse und Auslegerlängsachse aufgespannten Ebene positioniert sein und dadurch eine einfache Verrechnung der Greifposition erfolgen.

Alternativ dazu kann eine Auslegerlängsachse des Auslegerelements einen Auslegerabstand zur Drehachse aufweisen. Ein derartiger Abstand kann dazu benutzt werden, ein von der Greifvorrichtung und einem aufgenommenen Werkstück auf den Drehkopf ausgeübtes Lastmoment zu minimieren, indem deren Schwerpunkt in eine Ebene durch die Drehachse positioniert werden kann. Weiters kann damit die Position der Greifvorrichtung an die Verstellmöglichkeiten der jeweils eingesetzten Verstelleinrichtung angepasst werden.

Eine unkomplizierte Verrechnung der Werkstückposition und eine einfache Konstruktion der Verbindungen zwischen Drehkopf und Auslegerelement bzw. Auslegerelement und Greifvorrichtung kann erreicht werden, wenn die Auslegerlängsachse in ihrer Arbeitsposition in einer zur Drehachse rechtwinkeligen Ebene angeordnet ist.

Eine gewinkelte Anordnung von Auslegerelement und Greifvorrichtung, mit daraus entstehenden zusätzlichen Möglichkeiten, unterschiedlich orientierte Biegekanten ohne Umgreifen bearbeiten zu können wird erreicht, wenn eine Greifvorrichtungshauptachse der Greifvorrichtung quer zur Auslegerlängsachse orientierbar ist und dadurch die Mitte der Greifzone in dieser Stellung einen Greifabstand zur Auslegerlängsachse aufweist. Ein Werkstück besitzt dadurch, zusammen mit dem durch die Länge des Auslegerelements bewirkten Abstand, in zwei Stellungen des Drehkopfes, die durch eine Drehung um 90° auseinander hervorgehen einen ausreichenden Abstand von der Störkontur des Drehkopfs.

Wenn eine Breite der Greifvorrichtung, gemessen quer zu einer Greifvorrichtungshauptachse der Greifvorrichtung, kleiner ist und insbesondere weniger als die Hälfte der Querschnittsabmessung des Bewegungsgliedes mit dem Drehkopf beträgt, kann auch bei einem in Richtung der Breite kleinen Werkstück ein ausreichender Überstand gegenüber der Greifvorrichtung hergestellt werden, um auch Biegevorgänge mit zur Biegeebene paralleler Greifvorrichtungshauptachse durchzuführen.

Eine vorteilhafte Ausführungsform der Handhabungsvorrichtung bzw. der Fertigungseinrichtung besteht darin, die Verstelleinrichtung durch eine Zusatzdreheinrichtung am Auslegerelement zum Drehen der Greifvorrichtung mit einer zur Drehachse im Wesentlichen parallelen Zusatzdrehachse zu bilden Das Werkstück kann dadurch ohne Bewegung des Drehkopfs oder des Auslegerelements in zwei oder mehrere verschiedene Positionen verbracht werden.

Wenn die Greifvorrichtung mittels der Zusatzdreheinrichtung ausgehend von einer Referenzstellung um einen oder mehrere Winkelschritte von jeweils 90° drehbar ausgeführt ist, kann die Konstruktion der Zusatzdreheinrichtung einfach gehalten werden, da diese Winkelschritte beispielsweise durch schaltbare Endanschläge mit hoher Genauigkeit ausführbar sind.

Im Gegensatz dazu können zusätzliche Bearbeitungsmöglichkeiten geschaffen werden, indem die Greifvorrichtung mittels der Zusatzdreheinrichtung ausgehend von einer Referenzstellung im Wesentlichen stufenlos drehverstellbar ist. So können auch ohne Verstellung des Drehkopfs beispielsweise Biegekante, die zueinander beliebige Winkel einnehmen bearbeitet werden.

Alternativ, aber auch zusätzlich zu einer Zusatzdreheinrichtung kann die Verstelleinrichtung am Auslegerelement einen Linearantrieb zum Verschieben der Greifvorrichtung entlang einer Linearführung am Auslegerelement umfassen. Durch einen derartigen Linearantrieb, der konstruktiv einfach aufgebaut sein kann, können ebenfalls die Position oder die Winkellage eines Werkstücks einfach bezüglich des Auslegerelements verändert werden, um Umgreifvorgänge einzusparen.

Wenn die Linearführung und damit auch die Verschieberichtung der Greifvorrichtung in einer zur Drehachse rechtwinkeligen Ebene liegt, kann die Linearführung konstruktiv einfach parallel zur Auslegerlängsachse am Auslegerelement angeordnet sein.

Eine einfachere Positionsverrechnung kann erfolgen, wenn die Greifvorrichtung mittels des Linearantriebs in zwei bezüglich der Drehachse im Wesentlichen spiegelsymmetrische Arbeitspositionen am Auslegerelement verstellbar ist. Dazu reicht beispielsweise eine konstruktiv einfache Lösung mit spiegelsymmetrischen Endanschlägen.

Der Linearantrieb kann dabei vorteilhaft einen pneumatisch oder elektrisch antreibbaren Linearmotor umfassen, wobei bei dieser mit oder ohne Wegsteuerung ausgestattet sein kann und durch eine große Auswahl an fertigen Systemen eine optimale Abdeckung der wichtigsten Anwendungsfälle einfach ist.

Das Auslegerelement kann um seine Auslegerlängsachse relativ zum Drehkopf drehbeweglich gelagert sein, wodurch diese Drehung um die eigene Achse eine zusätzliche Verstellmöglichkeit für die Werkstückposition schafft, die beispielsweise für Negativkantungen, also das Biegen in verschiedene Richtungen bezogen auf eine Referenzfläche am Werkstück verwendet werden kann.
Weiters kann die Auslegerlängsachse des Auslegerelements beweglich bezüglich des Drehkopfs angeordnet sein, also das Auslegerelement nicht nur wie zuvor beschrieben verschiedene Drehwinkel sondern auch verschiedene Richtungswinkel bezüglich des Drehkopfs einnehmen.

Eine baulich einfachere Anbindung des Auslegerelements am Drehkopf ist im Gegensatz zu den beiden letzten Ausführungsformen möglich, wenn eine Auslegerlängsachse des Auslegerelements starr bezüglich des Drehkopfs angeordnet ist.

So kann insbesondere das Auslegerelement an einer die Drehachse, insbesondere rechtwinkelig, schneidenden Schwenkdrehachse schwenkbar am Drehkopf gelagert und mit einer Schwenkdreheinrichtung wirkverbunden sein. Die Verstelleinrichtung kann in dieser Ausführungsform beispielsweise eine Wendedrehvorrichtung für eine Drehbewegung der Greifvorrichtung um eine zu einer Greifvorrichtungshauptachse der Greifvorrichtung parallele Wendeachse, also eine Möglichkeit die Greifvorrichtung um die eigene Hauptachse zu drehen umfassen, wodurch ein Werkstück wiederum äußerst flexibel positionierbar ist.

Bei allen Ausführungsformen der Handhabungsvorrichtungen kann die Greifvorrichtung vorteilhaft mittels einer Wendedreheinrichtung um eine zu einer Greifvorrichtungshauptachse der Greifvorrichtung parallele oder mit dieser zusammenfallende Wendeachse relativ zum Auslegerelement schwenkbar gelagert sein, wodurch unter anderem, wie zuvor beschrieben, die Durchführung von Negativkantungen einfach möglich ist.

Ein ähnlicher Effekt kann erzielt werden, wenn die Greifvorrichtung mittels einer Wendedreheinrichtung um eine zur Auslegerlängsachse parallele oder mit dieser zusammenfallende Wendeachse am Auslegerelement, schwenkbar gelagert ist. Die Wahl zwischen dieser Variante und der zuletzt beschriebenen kann nach konstruktiven Gesichtspunkten getroffen werden, wobei auch eine Kombination der beiden möglich ist.

Baulich einfache Lösungen bei trotzdem in vielen Fällen ausreichender Flexibilität können gewählt werden, wenn die Greifvorrichtung mittels der Wendedreheinrichtung ausgehend von einer Referenzwinkellage um Winkelschritte von jeweils 180° drehbar ist. Dies ist ähnlich wie bei der Zusatzdreheinrichtung beispielsweise mit schaltbaren Anschlägen möglich.

Die Greifvorrichtung kann vorteilhaft ein oder mehrere Greifelemente in Form eines Magnetgreifelements, eines Zangengreifelements und/oder eines Vakuumsaugelements umfassen, wobei die Wahl abhängig von dem zu bearbeitenden Produktspektrum, insbesondere von der Werkstückgeometrie, getroffen werden kann.

Kurze Umrüstvorgänge an der Handhabungsvorrichtung können erreicht werden, wenn das Auslegerelement über eine Kupplungsvorrichtung mit dem Drehkopf verbunden ist. Dies betrifft die mechanische, die elektrische, steuerungstechnische Kopplung. An den sonstigen Gelenken zwischen den einzelnen Bewegungsgliedern der Handhabungsvorrichtung können diese Kopplungen beispielsweise mit flexiblen Leitungen, als auch mit Schleifkontakten erfolgen, wobei mit Schleifkontakten geringere Einschränkungen bei der Programmierung der Bewegungssteuerung bestehen.

Eine flexible Ausführungsform der Fertigungseinrichtung besteht darin, dass die Handhabungsvorrichtung in Richtung einer Längsachse der Pressbalken auf einer Führungsanordnung verfahrbar gelagert ist, insbesondere wenn die Führungsanordnung nicht an der Biegepresse, sondern beispielsweise an einem Hallenboden angeordnet ist. Die Biegepresse kann dadurch über ihre gesamte Länge bedient werden und sich der Arbeitsraum der Handhabungsvorrichtung sogar seitlich darüber hinaus erstrecken. Eine bestehende Biegepresse kann auf diese Weise leicht nachträglich mit einem Manipulator nachgerüstet werden, ohne dass größere bauliche Änderungen erforderlich wären. Die Steuerung der Biegepresse muss dabei mit der Steuerung der Handhabungsvorrichtung verknüpft werden.

Eine mechanisch stabile und mit großem möglichem Arbeitsraum ausgestattete Ausführungsform ist gegeben, wenn die Handhabungsvorrichtung ausgehend von einem Grundgestell drei als Schwenkarme ausgebildete Bewegungsglieder umfasst, die mit Schwenkgelenken zu einer Schwenkarmanordnung verbunden sind und deren Schwenkgelenke parallel zur Längsachse der Pressbalken ausgerichtet sind und der Drehkopf am dritten Schwenkarm angeordnet ist.

Zum besseren Verständnis der Erfindung wird diese anhand der in den Figuren dargestellten Ausführungsbeispiele näher erläutert.

Es zeigen in vereinfachter, schematischer Darstellung:
- Fig. 1:: eine erfindungsgemäße Fertigungseinrichtung mit einer Biegepresse und einer Handhabungsvorrichtung;
- Fig. 2a und 2b:: eine Ansicht sowie eine Draufsicht auf einen Drehkopf einer nicht in den Schutzumfang der Erfindung fallenden Handhabungsvorrichtung in Richtung seiner Drehachse eines ersten Ausführungsbeispiels mit einer Vakuum-Greifvorrichtung;
- Fig. 3a bis 3c:: eine Draufsicht auf den an den Drehkopf anschließenden Teil einer nicht in den Schutzumfang der Erfindung fallenden Handhabungsvorrichtung in einer weiteren Ausführungsform mit einer Zangen-Greifvorrichtung;
- Fig. 4:: eine Ansicht eines Teils einer nicht in den Schutzumfang der Erfindung fallenden Handhabungsvorrichtung in einem weiteren Ausführungsbeispiel mit einer Magnet-Greifvorrichtung;
- Fig. 5a bis 5 c:: eine Draufsicht auf einen Teil einer nicht in den Schutzumfang der Erfindung fallenden Handhabungsvorrichtung in einer weiteren Ausführungsform mit geänderter Anordnung der Wendeachse;
- Fig. 6a bis 6d:: ein weiteres Ausführungsbeispiel einer erfindungsgemäßen Handhabungsvorrichtung mit einer Verstelleinrichtung in Form eines Linearantriebs;
- Fig. 7a bis 7d:: eine Ansicht sowie drei Draufsichten auf eine nicht in den Schutzumfang der Erfindung fallenden Handhabungsvorrichtung mit einem klappbaren Auslegerelement;
- Fig. 8:: eine Ansicht einer weiteren Ausführungsform der nicht in den Schutzumfang der Erfindung fallenden Handhabungsvorrichtung.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind bei einer Lageänderung sinngemäß auf die neue Lage zu übertragen. Weiters können auch Einzelmerkmale oder Merkmalskombinationen aus den gezeigten und beschriebenen unterschiedlichen Ausführungsbeispielen für sich eigenständige, erfinderische oder erfindungsgemäße Lösungen darstellen.

Sämtliche Angaben zu Wertebereichen in gegenständlicher Beschreibung sind so zu verstehen, dass diese beliebige und alle Teilbereiche daraus mit umfassen, z.B. ist die Angabe 1 bis 10 so zu verstehen, dass sämtliche Teilbereiche, ausgehend von der unteren Grenze 1 und der oberen Grenze 10 mitumfasst sind, d.h. sämtliche Teilbereich beginnen mit einer unteren Grenze von 1 oder größer und enden bei einer oberen Grenze von 10 oder weniger, z.B. 1 bis 1,7, oder 3,2 bis 8,1 oder 5,5 bis 10.

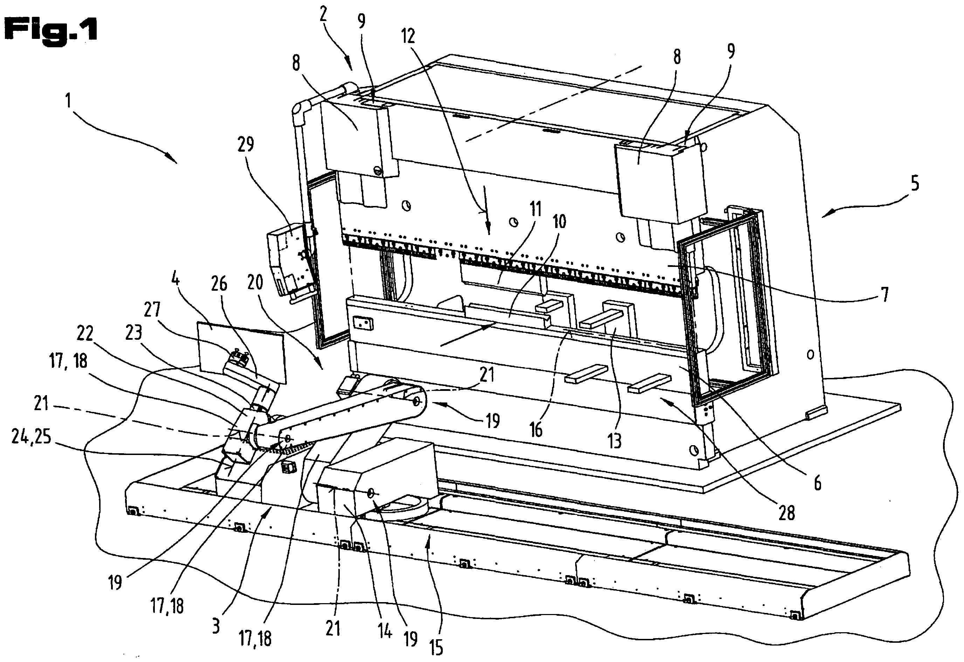

Fig. 1 zeigt eine Fertigungseinrichtung 1 umfassend eine Biegepresse 2 sowie eine erfindungsgemäße Handhabungsvorrichtung 3, zum Biegeumformen von Platinen aus umformbaren Materialien insbesondere Blech, infolge einfach als Werkstück 4 bezeichnet. Die mit der Fertigungseinrichtung 1 bearbeitbaren Werkstücke 4 entsprechen im wesentlichen jenen, die von Bedienpersonal auf einer allein stehenden Biegepresse 2 bearbeitet werden können, lediglich durch die Handhabungsvorrichtung 3 kann das Spektrum der mit der Fertigungseinrichtung 1 bearbeitbaren Werkstücke 4 durch die Handhabbarkeit und das automatische Ergreifen eingeschränkt sein.

Auf Einzelheiten der Biegepresse 2 wird an dieser Stelle nicht eingegangen, da diese aus dem Stand der Technik bereits bekannt sind. Im Wesentlichen besteht die Biegepresse 2 aus einem Maschinengestell 5 mit einem feststehenden unterem Pressbalken 6 sowie einem mit diesem in einer Ebene angeordneten oberen Pressbalken 7. Dieser ist mit Hilfe eines Stellantriebs 8 und einer Führungsanordnung 9 in Richtung zum feststehenden Pressbalken 6 verstellbar am Maschinengestell 5 gelagert. Weiters sind die Pressbalken 6, 7 zueinander im Wesentlichen parallel und waagrecht angeordnet. Am unteren Pressbalken 6 ist als unteres Biegewerkzeug 10 ein Biegegesenk sowie am oberen verstellbaren Pressbalken 7 als Biegewerkzeug 11 ein Biegestempel befestigt, die in ihrem Zusammenwirken beim Absenken des verstellbaren Pressbalkens 7 in Pressrichtung 12 an einem Werkstück 4 eine Biegekante erzeugen. Das dabei eingesetzte Biegeverfahren kann dabei ein Frei-Biege-Verfahren, ein Frei-Punkt-Biegeverfahren oder ein Präge-Biegeverfahren sein, wobei abhängig vom jeweils eingesetzten Biegeverfahren auch ein entsprechendes Biegewerkzeug 10, 11 zum Einsatz kommt.
Das zu biegende Bleckwerkstück 4 wird bei der Fertigungseinrichtung 1 nicht von einem Bediener, sondern von der Handhabungsvorrichtung 3 zwischen den Biegewerkzeugen 10, 11 positioniert, gegebenenfalls an einem oder mehreren Hinteranschlägen 13 exakt zur Biegelinie ausgerichtet, während des Biegevorganges weiter gehalten und nachgeführt sowie im Anschluss an dem Biegevorgang aus der Biegepresse entnommen und für einen nächsten Biegevorgang vorbereitet oder zu einer weiteren Bearbeitung abgelegt. Bei der Verwendung von Hinteranschlägen 13 zur exakten Positionierung kann die von der Handhabungsvorrichtung 3 und deren Komponenten einzuhaltende Genauigkeit bezüglich Positionierung und Winkellage etwas niedriger angesetzt werden und somit die Investitionskosten relativ niedrig gehalten werden.

Die Handhabungsvorrichtung 3 umfasst ein Grundgestell 14, das im dargestellten Ausführungsbeispiel entlang einer Führungsanordnung 15 in Richtung einer Längsachse 16 der Biegepresse 1 verfahrbar gelagert ist, wodurch die Handhabungsvorrichtung 3 entlang der Längsachse 16 verschiedene Positionen einnehmen kann. An das Grundgestell 14 schließen nacheinander mehrere Bewegungsglieder 17 an, wobei es sich im dargestellten Ausführungsbeispiel dabei um drei Schwenkarme 18 handelt, die am Grundgestell 14 beziehungsweise untereinander mit Schwenkgelenken 19 zu einer Gelenkarmanordnung 20 verbunden sind. Die Schwenkgelenke 19 besitzen dabei zueinander parallele Schwenkachsen 21, die parallel zur Führungsanordnung 15 und damit auch zur Längsachse 16 der Pressbalken 6, 7 orientiert sind. An einem letzten Bewegungsglied 22 der Gelenkarmanordnung 20 ist ein Drehkopf 23 angeordnet, der relativ zum letzten Bewegungsglied 22 eine Drehung ausführen kann, wobei eine Drehachse 24 dieser Drehbewegung mit einer Mittelachse 25 des Bewegungsgliedes im Wesentlichen zusammenfällt. Am Drehkopf 23 ist ein Auslegerelement 26 angeordnet, das an seinem Ende eine Greifvorrichtung 27 zum Greifen des Werkstücks 4 trägt und im dargestellten Ausführungsbeispiel rechtwinkelig zur Drehachse 25 ausgerichtet ist. Ein mit der Greifvorrichtung 27 erfasstes Werkstück 4 kann somit mit Hilfe der Handhabungsvorrichtung 3 in seiner Lage und Orientierung bezüglich der Biegepresse 2, insbesondere des unteren Biegewerkzeugs 10 auf beliebige Weise verändert werden, wodurch die Durchführung verschiedenster Biegeaufgaben möglich ist. Abhängig von den Abmessungen und der Geometrie des Werkstücks 4 kann es erforderlich sein, dass mit der Greifvorrichtung 27 am Werkstück 4 eine Veränderung der Greifposition durchgeführt werden muss, wozu beispielsweise im Bereich des unteren Pressbalkens 6 eine Umgreifstation 28 angeordnet ist, die das Werkstück 4 während der Durchführung eines Umgreifvorganges aufnehmen und positionsgenau fixieren kann.

Fig. 1 zeigt weiters eine Steuer- und Überwachungseinrichtung 29 mit der die Funktionen der Fertigungseinrichtung 1 gesteuert und überwacht werden.

In den folgenden Figuren sind verschiedene, teilweise nicht in den Schutzumfang der Erfindung fallende (siehe Figurenkurzbeschreibung) Ausführungsformen des an den Drehkopf 23 anschließenden Auslegerelements 26 sowie der daran anschließenden Greifvorrichtung 27 dargestellt, welche im Folgenden erläutert werden.

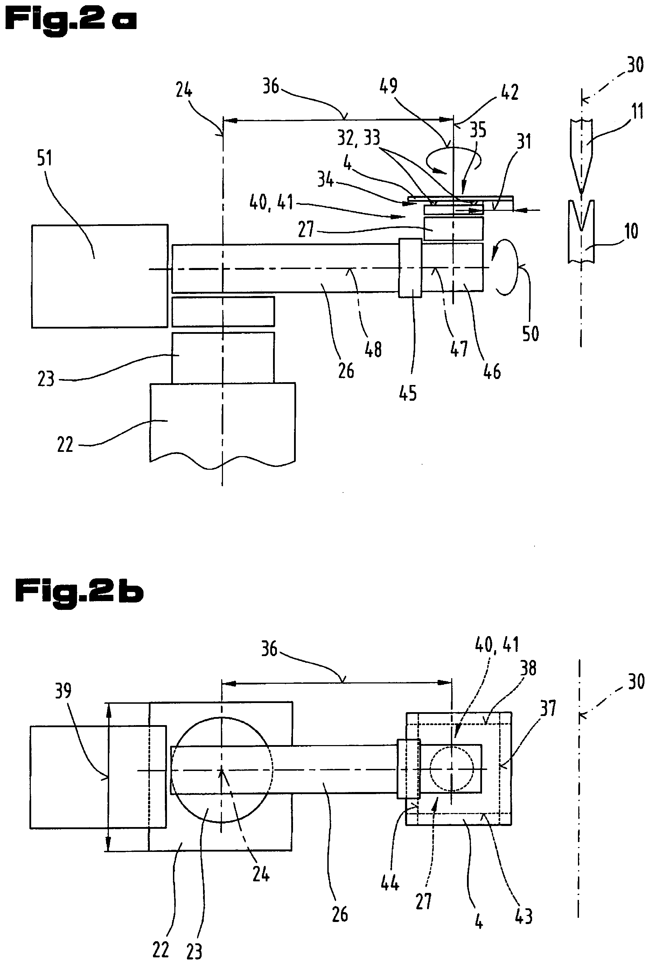

Fig. 2a zeigt schematisch den an das Bewegungsglied 22 anschließenden Teil der Handhabungsvorrichtung 3, mit der ein Werkstück 4 zwischen die Biegewerkzeuge 10, 11 positioniert werden kann. Bei der Durchführung eines Biegevorganges, insbesondere eines Abkantvorganges an einer Biegepresse 2 muss ein Werkstück 4 eine aus unterem Biegewerkzeug 10 und oberem Biegewerkzeug 11 definierte Biegeebene durchragen, dass heißt, das Werkstück 4 benötigt einen Überstand 31 um den es die Greifvorrichtung 27 beziehungsweise die Handhabungsvorrichtung 3 frei auskragend überragt. Die Handhabungsvorrichtung 3 bildet somit für die Durchführung von Biegevorgängen eine so genannte Störkontur, die die erforderlichen Positioniervorgänge des Werkstücks 4 im Bezug auf die Biegewerkzeuge 10, 11 sowie die diese tragenden Pressbalken 6, 7 behindern kann. Insbesondere wenn an einem Werkstück 4 mehrere Kantungen durchgeführt werden sollen, verursacht die Störkontur der Handhabungsvorrichtung 3 zwischen den einzelnen Biegevorgängen jeweils einen notwendigen Umgreifvorgang, für dessen Durchführung das Werkstück 4 in die Umgreifstation 28 positioniert werden muss und an einer anderen Greifposition erfasst werden muss. Derartige Umgreifvorgänge erhöhen die Taktzeit und dadurch die Maschinenbelegungszeit, weshalb anzustreben ist, die an einem Werkstück 4 auszuführenden Kantungen mit möglichst wenigen Umgreifvorgängen durchzuführen.

Im dargestellten Ausführungsbeispiel umfasst die Greifvorrichtung 27 mehrere Greifelemente 32 die als Vakuumsaugelemente 33 ausgebildet sind. Die Greifelemente 32 beziehungsweise die Vakuumsaugelemente 33 definieren eine Greifzone 34 an der Greifvorrichtung 27, mit der ein Werkstück 4 gehalten werden kann. Abhängig von der Art der Greifelemente 32, deren Größe und Anordnung an der Greifvorrichtung 27 kann die Greifzone 34 flächenmäßig eine größere Ausdehnung besitzen oder beispielsweise wie im Fall eines Zangengreifers sehr klein sein. Dabei besitzt eine Mitte 35 der Greifzone 34 einen Abstand 36 von der Drehachse 24 des Drehkopfs 23. Das heißt, das Werkstück 4 wird exzentrisch bezüglich der Drehachse 24 von der Greifvorrichtung 27 erfasst. Dieser Abstand 36 wird durch das zuvor erwähnte Auslegerelement 26 bewirkt, das auch die Greifvorrichtung 27 in einen Abstand zur Drehachse 24 bringt.

Wie in Figur 2b gut erkennbar ist, kann eine erste Biegekante 37 des Werkstücks 4 einfach in Deckung mit der Biegeebene 30 gebracht werden, da das Werkstück 4 gegenüber der Störkontur einen ausreichenden Überstand 31 aufweist. Eine zweite Biegekante 38, die rechtwinkelig zur ersten Biegekante 37 am Werkstück 4 ist, besitzt gegenüber der Greifvorrichtung 27 beziehungsweise dem Auslegerelement 26 ebenfalls einen Überstand, eine Querschnittsabmessung 39 des Bewegungsgliedes 22 ist jedoch so groß, dass das Werkstück 4 nicht einfach durch Drehen des Auslegerelements 26 um 90° durch die Drehachse 24 und Bewegen der Gelenkarmanordnung 20 zur Deckung mit der Biegeebene 30 gebracht werden kann. Um das Werkstück 4 an der zweiten Biegekante 38 bearbeiten zu können, muss dieses also entweder an der Umgreifstation 28 abgelegt werden, damit die Greifvorrichtung 27 eine andere Greifposition am Werkstück 4 einnehmen kann oder das Werkstück 4 muss in seiner Position und/ oder seiner Winkellage bezüglich des Auslegerelements 26 verändert werden. Dazu besitzt die Handhabungsvorrichtung 3 eine Verstelleinrichtung 40, mit der die Position und/oder die Winkellage der Greifvorrichtung 27 und damit auch des von dieser erfassten Werkstücks 4 bezüglich des Auslegerelements 26 verändert werden kann.

Diese Verstelleinrichtung 40 ist im dargestellten Ausführungsbeispiel durch eine Zusatzdreheinrichtung 41 gebildet, mit der die Greifvorrichtung 27 um eine Zusatzdrehachse 42 relativ zum Auslegerelement 26 drehbar gelagert ist. Diese Zusatzdrehachse 42 ist im Wesentlichen parallel zur Drehachse 24 und ermöglicht eine Verstellung der Winkellage der Greifvorrichtung 27 und damit auch des Werkstücks 4 relativ zum Auslegerelement 26, wobei die Verstellung in größeren Winkelschritten, insbesondere 90°-Schritten, aber auch weitgehend stufenlos ausgeführt werden kann. Die Positionierung des Werkstücks 4 für die Durchführung der Biegung an der zweiten Biegekante 38 erfolgt somit hauptsächlich nicht durch eine Bewegung der Gelenkarmanordnung 20 oder des Drehkopfes 23 sondern hauptsächlich durch eine Drehung der Greifvorrichtung 27 um die Zusatzdrehachse 42, beim dargestelltem Werkstück 4 um einen Winkel von 90°. Mittels der Verstelleinrichtung 40 im Form der Zusatzdreheinrichtung 41 kann also die Greifvorrichtung 27 und die Greifzone 34 zumindest zwei verschiedene Stellungen bezüglich des Auslegerelements 26 einnehmen, wodurch das Biegen des Werkstücks 4 an zwei Biegekanten 37, 38 ohne einen Umgreifvorgang möglich ist, auch wenn die maßgeblichen Abmessungen des Werkstücks 4 kleiner sind, als die maßgeblichen Querschnittsabmessungen an der Handhabungsvorrichtung 3. Mit Hilfe der Zusatzdreheinrichtung 41 können beispielsweise auch eine dritte Biegekante 43 und eine vierte Biegekante 44 am Werkstück 4 bearbeitet werden, ohne dass ein Umgreifvorgang stattfinden muss. Dies ist in diesem Fall möglich, da die Greifvorrichtung 27 das Werkstück 4 so erfasst, dass alle vier Kanten frei sind und gegenüber der Greifvorrichtung 27 vorragen können.

Um auch Kantungen in Gegenrichtung, also einen Gegenbug, am Werkstück 4 fertigen zu können, ist am Auslegerelement 26 weiters eine Wendedreheinrichtung 45 ausgebildet, mit der ein Endabschnitt 46 des Auslegerelements 26 und damit auch die Greifvorrichtung 27 mit einem gegebenenfalls erfassten Werkstück 4 um eine Wendeachse 47 verstellbar, die im wesentlichen mit einer Auslegerlängsachse 48 zusammenfällt. Für die Verdeutlichung der zusätzlichen Drehrichtungen sind in Figur 2 mit entsprechenden Pfeilen die Zusatzdrehrichtung 49 und die Wendedrehrichtung 50 eingetragen. Der für die Zusatzdrehreinrichtung 41 sowie die Wendedreheinrichtung 45 erforderliche Verstellantrieb ist vereinfacht durch einen Antriebsmotor 51 angedeutet. Im Ausführungsbeispiel gemäß Figur 2a und 2b schneidet die Auslegerlängsachse 48 die Drehachse 24 in einem rechten Winkel, abweichend davon sind jedoch Abwandlungen in der Form möglich, dass die Auslegerlängsachse 48 die Drehachse 24 unter einem anderen Winkel als einem rechten Winkel schneidet, oder diese nicht schneidet, sondern einen Abstand zur Drehachse 24 aufweist.

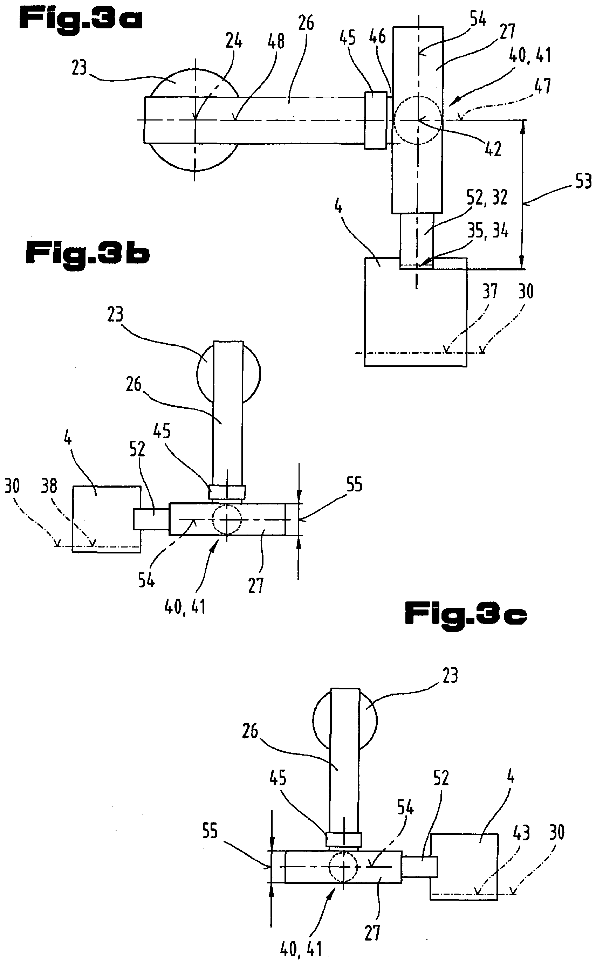

In den Fig. 3a bis 7d ist aus Gründen der einfacheren Darstellung der Antriebsmotor 51 für den Verstellantrieb der Verstelleinrichtung 40 nicht dargestellt.

Fig. 3a zeigt schematisch eine Ansicht einer weiteren Ausführungsform der Handhabungsvorrichtung 3, betrachtet in Richtung der Drehachse 24 des Drehkopfs 23. An diesem ist wieder ein Auslegerelement 26 angeordnet, wobei die Auslegerlängsachse 48 wieder die Drehachse 24 in einem rechten Winkel schneidet. Der Endabschnitt 46 des Auslegerelements 26 ist wieder durch eine Wendedreheinrichtung 45 um die Auslegerlängsachse 48 drehbar gelagert und trägt die Greifvorrichtung 27. Diese ist im Ausführungsbeispiel gemäß Fig. 3a bis 3c mit einem Zangengreifelement 52 ausgestattet, das das zu bearbeitende Werkstück 4 an einem Rand ergreift. Die Greifzone 34 ist in diesem Fall durch die Kontaktfläche zwischen dem Zangengreifelement 52 und dem Werkstück 4 definiert. Das Zangengreifelement 52 umfasst dabei zumindest zwei zusammenwirkende Zangenelemente, die ein Werkstück 4 an zwei gegenüberliegenden Oberflächen ergreift. Dabei kann ein feststehendes Zangenelement ausgebildet sein, wodurch die Verrechnung der von diesem berührten Werkstückoberfläche einfach ist. Die Abmessungen der Greifvorrichtung 27, insbesondere eines Zangengreifelements 52 sollten dabei möglichst schlank im Sinn von möglichst kleiner Störkontur sein, wobei stark unterschiedliche Werkstückabmessungen und -gewichte evtl. mehrere verschieden ausgeführte Zangengreifelemente 52 erfordern.

Zwischen dem Endabschnitt 46 und der Greifvorrichtung 27 ist als Verstelleinrichtung 40 wieder eine Zusatzdreheinrichtung 41 angeordnet, mittels derer die Greifvorrichtung 27 um die zur Drehachse 24 parallele Zusatzdrehachse 42 gedreht werden kann. Die Greifvorrichtung 27 und die Greifzone 34 können dadurch in verschiedene Positionen und Winkellagen bezüglich des Auslegerelements 26 verstellt werden. Im Gegensatz zu der Ausführung gemäß den Fig. 2a und 2b fällt die Greifzone 35 bei dieser Ausführungsform nicht mit der Auslegerlängsachse 48 bzw. der Zusatzdrehachse 42 zusammen, sondern besitzt in den dargestellten Stellungen einen Greifabstand 53, um den das Werkstück 4 exzentrisch bezüglich der Zusatzdrehachse 42 bzw. der Auslegerlängsachse 48 mit der Greifzone 34 erfasst wird. Die Greifvorrichtung 27 besitzt eine Greifvorrichtungshauptachse 54, die in den dargestellten Zuständen rechtwinkelig quer zur Auslegerlängsachse 48 verläuft. Der Gesamtabstand der Greifzone 34 von der Drehachse 24 setzt sich somit - in der dargestellten Ansicht - aus dem Achsabstand zwischen Drehachse 24 und Zusatzdrehachse 42 sowie dem rechtwinkelig dazu stehenden Greifabstand 53 zusammen. Durch den hier vorhandenen positiven Greifabstand 53 wird durch die Verstelleinrichtung 40 in Form der Zusatzdreheinrichtung 41 nicht nur die Winkellage der Greifzone 34, sondern auch deren Position bezüglich des Auslegerelements 26 verstellt.

In der dargestellten ersten Arbeitsposition ist die erste Biegekante 37 in die Biegeebene 30 positioniert, wonach die erste Kantung am Werkstück 4 durchgeführt werden kann.

Um, wie in Fig. 3b dargestellt, die zweite Biegekante 38 in die Biegeebene 30 zu positionieren, wird das Auslegerelement 26 zusammen mit dem Drehkopf 23 90° im Uhrzeigersinn um die Drehachse 24 verdreht. Allenfalls erforderliche zusätzliche Bewegungen der Handhabungsvorrichtung 3 um das Werkstück 4 an die geeignete Position zwischen die Biegewerkzeuge 10, 11 zu bringen, insbesondere ein Verfahren des Grundgestells 14 in Richtung der Längsachse 16, sei bei dieser Betrachtung außer Acht gelassen. Um anschließend die dritte Biegekante 43 in die Biegeebene 30 zu positionieren, wird die Zusatzdreheinrichtung 41 aktiviert und dadurch die Greifvorrichtung 27 in die in Fig. 3c dargestellte Stellung verbracht. Wie den Fig. 3b und 3c entnehmbar ist, ist die Möglichkeit, die Greifvorrichtungshauptachse 54 an die Biegeebene 30 anzunähern, durch eine Breite 55 der Greifvorrichtung 27, gemessen quer zur Greifvorrichtungshauptachse 54, begrenzt. Mit den drei Stellungen der Handhabungsvorrichtung 3, gemäß den Fig. 3a bis 3c, können somit drei Kantungen an einem Werkstück 4 durchgeführt werden, ohne dass ein Umgreifvorgang erforderlich ist. Falls auch an der von dem Zangengreifelement 52 erfassten Kante eine Kantung durchgeführt werden soll, ist zwingend ein Umgreifvorgang erforderlich, was bei der aus dem Stand der Technik bekannten Ausführung der Handhabungsvorrichtung bereits nach der ersten Kantung erforderlich ist.

Um Gegenbiegungen, also Negativkantungen, durchführen zu können, ist am Auslegerelement 26 wie in der Ausführung gemäß den Fig. 2a und 2b eine Wendedreheinrichtung 45 angeordnet, mittels derer die Greifvorrichtung 27 um die Wendeachse 47 gedreht werden kann.

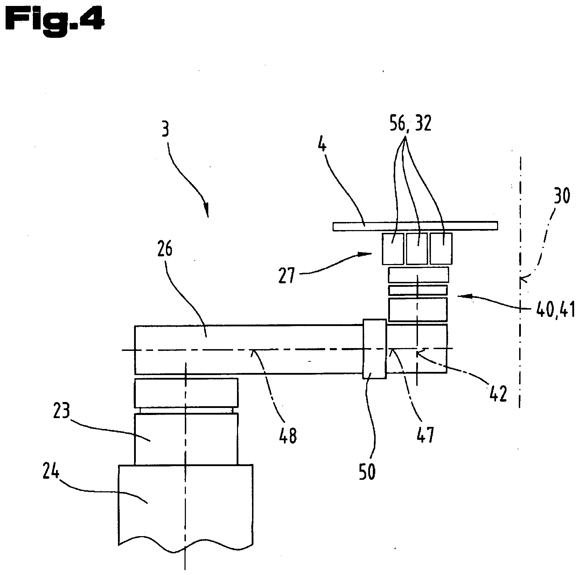

Fig. 4 zeigt ein weiteres Ausführungsbeispiel der Handhabungsvorrichtung 3, die bis auf die Art der Greifvorrichtung 27 und den der Einfachheit halber nicht dargestellten Antriebsmotor 48 der Ausführung gemäß Fig. 2a entspricht. In diesem Ausführungsbeispiel ist die Greifvorrichtung 27 zum Erfassen eines zu bearbeiteten Werkstücks 4 mit Magnetgreifelementen 56 ausgestattet, die ähnlich wie bei der Ausführung mit Vakuumsaugelementen 33 das Werkstück 4 an einer Fläche erfassen und dadurch dessen Ränder für eine allseitige Biegebearbeitung frei gegenüber der Greifvorrichtung 27 vorkragen können. Um die auf ein Blechstück 4 wirkende Magnethaltekraft zum Loslassen des Werkstücks 4 abschalten zu können, umfasst ein Magnetgreifelement 56 beispielsweise schaltbare Dauermagnete, vorzugsweise aber schaltbare Elektromagnete. Der restliche Aufbau und die Verwendung entspricht der Ausführungsform gemäß Fig. 2a und 2b, wenn die Greifzone 34 in der Verlängerung der Auslegerlängsachse 48 liegt.

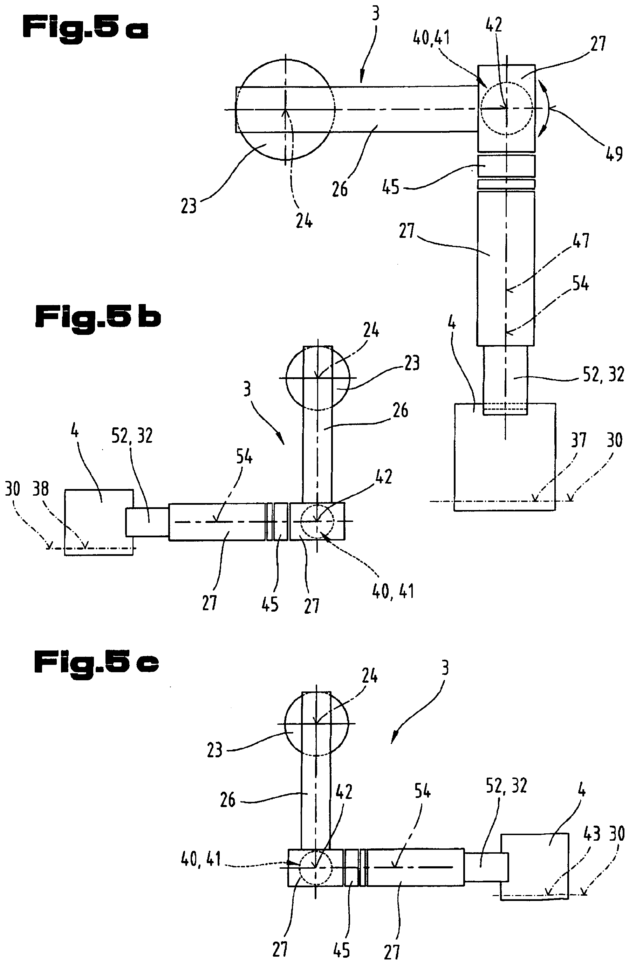

In den Fig. 5a bis 5c ist eine weitere Ausführungsform der Handhabungsvorrichtung 3, in drei verschiedenen Stellungen, betrachtet in Richtung der Drehachse 24 des Drehkopfs 23, dargestellt.

Fig. 5a zeigt wiederum einen Drehkopf 23, der an der nicht dargestellten Gelenkarmanordnung 20 angeordnet ist, und an dem das Auslegerelement 26 befestigt ist. An dessen Ende ist wieder die Greifvorrichtung 27 mit Hilfe der Verstelleinrichtung 40 in Form einer Zusatzdreheinrichtung 41 um die zur Drehachse 24 parallele Zusatzdrehachse 42 drehbar gelagert. Zum Unterschied zur Ausführung gemäß Fig. 3a ist die Wendedreheinrichtung 45 nicht am Auslegerelement 26 angeordnet, sondern an der Greifvorrichtung 27. Das Werkstück 4 ist in diesem Ausführungsbeispiel mit einem Greifelement 32 in Form eines Zangengreifelements 52 gehalten. Die Figur 5a zeigt dabei die Positionierung der ersten Biegekante 37 in der Biegeebene 30.

Durch diese Anordnung der Wendedreheinrichtung 45 ist die Wendeachse 47 parallel zur Greifvorrichtungshauptachse 54 oder mit dieser zusammenfallend orientiert.

Die Fig. 5b und 5c zeigen dieselbe Ausführungsform der Handhabungsvorrichtung 3 in den Stellungen zur Bearbeitung der zweiten Biegekante 38 bzw. der dritten Biegekante 43 am Werkstück 4. Die Stellung in Fig. 5b geht aus der Stellung gemäß Fig. 5a daraus hervor, dass das Auslegerelement 26 durch Aktivierung des Drehkopfes 23 um 90° im Uhrzeigersinn verstellt wird; die Stellung in Fig. 5c geht aus der Stellung in Fig. 5b hervor, in dem die Verstellvorrichtung 40 in Form einer Zusatzdreheinrichtung 41 die Greifvorrichtung 27 um 180° durch die Zusatzdrehachse 42 relativ zum Auslegerelement 26 verstellt.

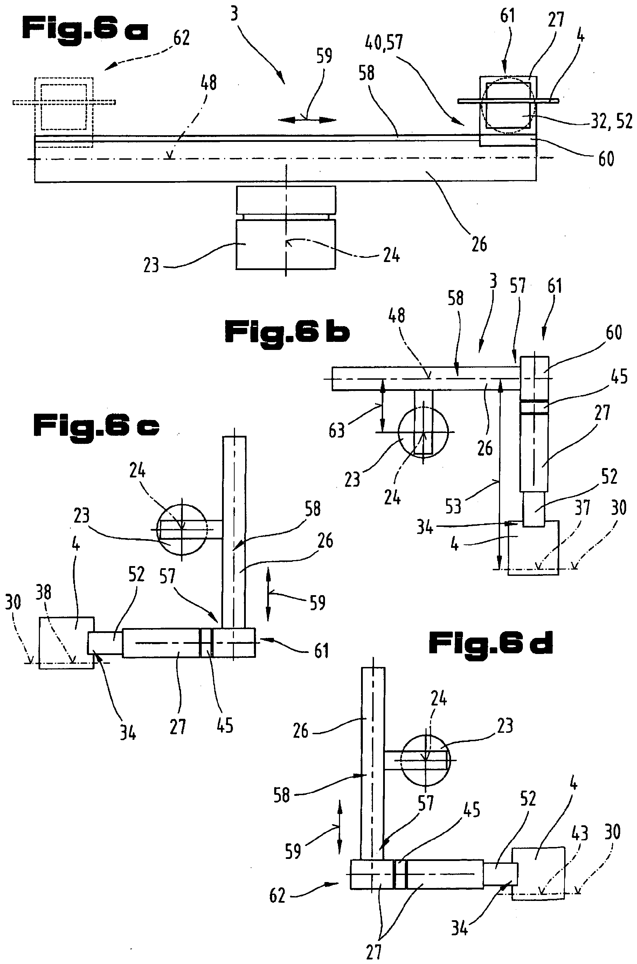

Die Fig. 6a bis 6d zeigen eine weitere Ausführungsform der erfindungsgemäßen Handhabungsvorrichtung 3, wobei nur der an den Drehkopf 23 anschließende Teil dargestellt ist.

Fig. 6a zeigt eine Ansicht quer zur Drehachse 24 des Drehkopfs 23 in vereinfachter, schematischer Darstellung. Dabei ist am Drehkopf 23 wieder ein Auslegerelement 26 befestigt und an diesem wieder die Greifvorrichtung 27, im Ausführungsbeispiel wieder in Form eines Zangengreifers mit Greifelementen 32 in Form von Zangengreifelementen 52, die ein Werkstück 4 erfassen können. Die Verstelleinrichtung 40 zum Verstellen der Greifvorrichtung 27 relativ zum Auslegerelement 26, umfasst in dieser Ausführungsform einen Linearantrieb 57, der eine lineare Verschiebung der Greifvorrichtung 27 relativ zum Auslegerelement 26 gestattet. Eine Linearführung 58 am Auslegerelement 26 definiert eine Verschieberichtung 59 für die Bewegung der Greifvorrichtung 27. Der Linearantrieb 57 umfasst in dieser Ausführung einen Führungsschlitten 60, der an der Linearführung 58 verschieblich gelagert ist. Die Greifvorrichtung 27 kann dadurch von einer in Volllinien dargestellten ersten Arbeitsposition 61 in eine mit strichlierten Linien dargestellte zweite Arbeitsposition 62 verfahren werden. Diese beiden Arbeitspositionen 61, 62 sind - wie in Fig. 6a erkennbar - vorzugsweise spiegelsymmetrisch bezüglich der Drehachse 24 und können mit Hilfe eines nicht dargestellten Linearmotors, der beispielsweise elektrisch oder pneumatisch angetrieben sein kann, mit Hilfe von gegebenenfalls einstellbaren Wegbegrenzungen oder mit von der Steuer- und Überwachungseinrichtung 29 steuerbaren Sollwertvorgaben angefahren werden, wobei der Einsatz von steuerbaren Sollwertvorgaben eine flexible Verwendung dieser Linearachse zulässt.

Die Auslegerlängsachse 48 kann - wie in den zuvor beschriebenen Ausführungsbeispielen - die Drehachse 24 schneiden, abweichend davon ist aus Fig. 6b entnehmbar, dass die Auslegerlängsachse 48 des Auslegerelements 26 zur Drehachse 24 des Drehkopfs 23 einen Auslegerabstand 63 aufweisen kann. Dieser Auslegerabstand 63 kann insbesondere dazu verwendet werden, auf den Drehkopf 23 vom Auslegerelement 26, der Greifvorrichtung 27 und dem Werkstück 4 ausgeübte Kräfte und Lastmomente zumindest teilweise und für die häufigsten Anwendungsfälle zu minimieren, z.B. durch Annähern des Schwerpunktes an die Drehachse 24. Der Auslegerabstand 63 und der Greifabstand 53 sind in der dargestellten Anordnung gegensinnig in Bezug auf die Drehachse 24, d.h. in unterschiedliche Richtungen orientiert, sie können jedoch auch in die gleiche Richtung weisen, wodurch sich der Abstand der Greifzone 34 von der Drehachse 24 mit zunehmendem Auslegerabstand 63 und Greifabstand 53 in jedem Fall vergrößert.

Fig. 6b zeigt weiters, dass die Greifvorrichtung 27 wieder eine antreibbare Wendedreheinrichtung 45 aufweisen kann, mit Hilfe derer Negativkantungen, also Biegungen in verschiedene Richtungen bezüglich der Hauptebene des Werkstücks 4, ohne zusätzliche Umgreifvorgänge möglich sind. Fig. 6b zeigt die Handhabungsvorrichtung 3 in einer ersten Stellung zur Bearbeitung einer ersten Biegekante 37, die dazu in die Biegeebene 30 positioniert ist. Um die zweite Biegekante 38 in die Biegeebene 30 zu positionieren (siehe Fig. 6c), ist ausgehend von der Stellung in Fig. 6b eine Drehung der Greiferanordnung um die Drehachse 24 durch einen Winkel von 90° erforderlich. Die Greifvorrichtung 27 verbleibt dabei in der ersten Arbeitsposition 61. Um die dritte Biegekante 43 in die Biegeebene 30 zu positionieren, sind zwei Teilbewegungen der Handhabungsvorrichtung 3 erforderlich. Einerseits ist das Auslegerelement 26 mit dem Drehkopf 23 um 180° bezüglich der Drehachse 24 zu verstellen, andererseits muss die Greifvorrichtung 27 mit Hilfe des Linearantriebs 57 entlang der Linearführung 58 aus der ersten Arbeitsposition 61 in die zweite Arbeitsposition 62 am Auslegerelement 26 verstellt werden. Die Wirkung der Verstelleinrichtung 40 auf die Bearbeitungsmöglichkeiten am Werkstück 4 entspricht auch den zuvor beschriebenen Ausführungsbeispielen, wobei allerdings die Zusatzdreheinrichtung 41 durch den Linearantrieb 57 ersetzt ist.

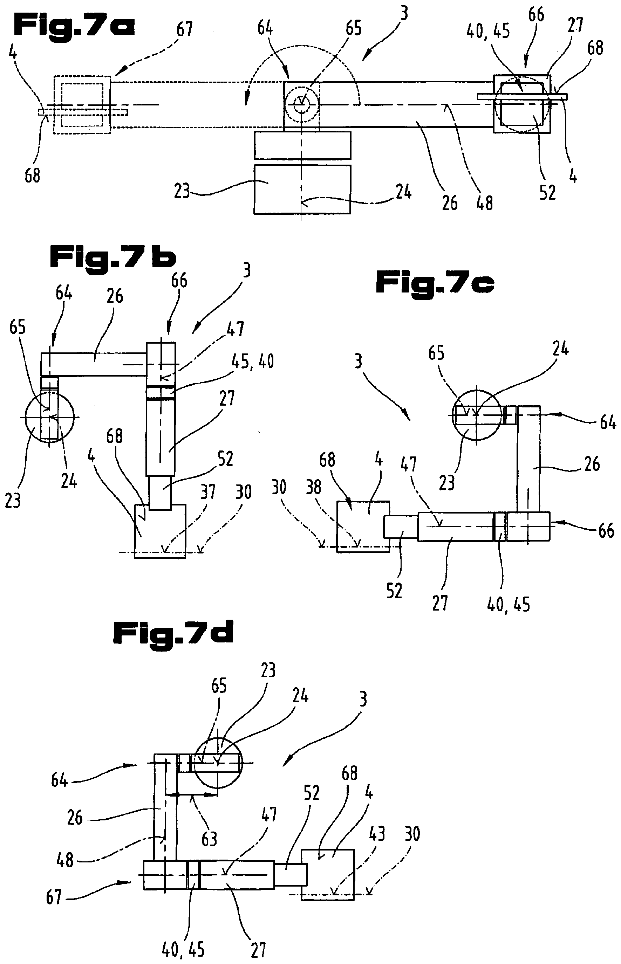

Die Fig. 7a bis 7d zeigen eine weitere Ausführungsform der Handhabungsvorrichtung 3. In dieser Ausführungsform ist am Drehkopf 23 wieder ein Auslegerelement 26 angeordnet, das die Greifvorrichtung 27 trägt. Zum Unterschied zu den vorher beschriebenen Ausführungsformen ist das Auslegerelement 26 jetzt nicht starr mit dem Drehkopf 23 verbunden, sondern mit Hilfe einer Schwenkeinrichtung 64 um eine Schwenkdrehachse 65 relativ zum Drehkopf 23 verstellbar gelagert. Durch die Schwenkdreheinrichtung 64 kann das Auslegerelement 26 und mit diesem die Greifvorrichtung 27, aus einer in Volllinien dargestellten ersten Schwenkposition 66 in eine mit strichlierten Linien dargestellte zweite Schwenkposition 67 verstellt werden. Wie aus Fig. 7a erkennbar, wird durch diesen Schwenkvorgang eine am Werkstück 4 in der ersten Schwenkposition nach oben orientierte erste Bezugsfläche 68 in der zweiten Schwenkposition 67 nach unten orientiert, d.h. die Biegerichtungen unterscheiden sich zwischen den beiden Schwenkpositionen 66, 67. Um jedoch auch Kantungen in dieselbe Richtung wie in der ersten Schwenkposition 66 ausführen zu können, ist eine Verstelleinrichtung 40 für die Greifvorrichtung 27 in Form einer zuvor beschriebenen Wendedreheinrichtung 45 zwischen Auslegerelement 26 und Greifvorrichtung 27 angeordnet Durch eine Drehung der Greifvorrichtung 27 um eine Wendeachse 47 durch 180° kann das Werkstück 4 mit der Bezugsfläche 68 auch in der zweiten Schwenkposition 67 nach oben orientiert werden.

Fig. 7b zeigt dieselbe Ausführungsform der Handhabungsvorrichtung 3 in einer Stellung, bei der eine erste Biegekante 37 des Werkstücks 4 in die Biegeebene 30 positioniert ist. Das Auslegerelement 26 befindet sich dabei in der ersten Schwenkposition 66 und die Bezugsfläche 68 des Werkstücks 4 ist nach oben orientiert.
Zum Bearbeiten der zweiten Biegekante 38 erfolgt lediglich eine Drehung des Auslegerelements 26 mittels des Drehkopfs 23 um die Drehachse 24 durch einen Winkel von 90°. Das Auslegerelement 26 verbleibt dabei in der ersten Schwenkposition 66. Um die dritte Biegekante 43 in die Bezugsebene 30 zu positionieren, sind bei dieser Ausführungsform folgende drei Schritte erforderlich:
a) Drehung des Drehkopfes 23 um die Drehachse 24 durch einen Winkel von 180°,
b) Betätigung der Schwenkdreheinrichtung 64 zum Verbringen des Auslegerelements 26 aus der ersten Schwenkposition 66 in die zweite Schwenkposition 67 und
c) Betätigung der Wendedreheinrichtung 45, falls die Bezugsfläche 68 des Werkstücks 4 für die Kantung der dritten Biegekante 43 ebenfalls nach oben orientiert sein soll.

Wie in Fig. 7d dargestellt, kann zwischen der Auslegerlängsachse 48 und der Drehachse 24 auch bei dieser Ausführung ein Auslegerabstand 63 ausgebildet sein, abweichend davon kann, wie auch bei den zuvor beschriebenen Ausführungsvarianten, die Auslegerlängsachse 48 die Drehachse 24 schneiden. Abweichend von dem dargestellten Ausführungsbeispiel kann auch die Schwenkdrehachse 65 einen Abstand zur Drehachse 24 aufweisen, die Greifvorrichtung 27 ist allerdings bei einer derartigen Ausführung in den beiden Schwenkpositionen 66, 67 nicht symmetrisch bezüglich der Drehachse 24 positioniert, was jedoch von der Steuer- und Überwachungseinrichtung 29 verrechnet werden kann.

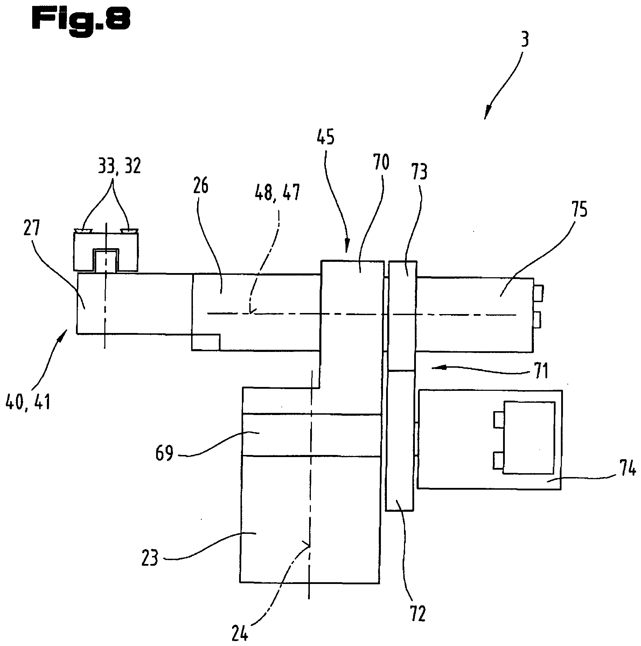

Fig. 8 zeigt einen Ausschnitt aus einer weiteren Ausführungsform der Handhabungseinrichtung 3. Bei dieser schließt an den schon bereits zuvor beschriebenen Drehkopf 23 eine Kupplungsvorrichtung 69 an, die einen einfachen Austausch der am Drehkopf 23 befestigten Aggregate ermöglicht. Das Auslegerelement 26 ist mit der Kupplungsvorrichtung 69 über einen Lagerbock 70 verbunden und ist in diesem um die Auslegerlängsachse 48 drehbar gelagert. Diese drehbare Lagerung des Auslegerelements 26 im Lagerbock 70 bildet die Wendedreheinrichtung 45 mit der Wendeachse 47, die mit der Auslegerlängsachse 48 zusammenfällt. Das für diese Wendedrehbewegung erforderliche Drehmoment wird in diesem Ausführungsbeispiel über ein Getriebe 71, umfassend ein erstes Zahnrad 72 und ein zweites Zahnrad 73, auf das Auslegerelement 26 übertragen. Das erste Zahnrad 72 wird von einem Wendeantriebsmotor 74 angetrieben, und treibt das mit dem Auslegerelement 26 drehfest verbundene zweite Zahnrad 73.
Am Auslegerelement 26 ist weiters ein Zusatzmotor 75 angeordnet, der den Verstellantrieb für die Zusatzdreheinrichtung 41 für die Verstellung der Greifvorrichtung 27 relativ zum Auslegerelement 26 bildet. Der Wendeantriebsmotor 74 und der Zusatzmotor 75 können, so wie alle für die Handhabungsvorrichtung 3 eingesetzten Motoren als Elektromotor, in der Bauart Gleichstrommotor, Wechselstrommotor, Synchronmotor, Asynchronmotor, Schrittmotor usw., ausgeführt sein. Die Anordnung der Antriebsmotoren auf der der Greifvorrichtung 27 gegenüberliegenden Seite bezüglich der Wendeachse ergibt eine günstige Lastverteilung mit relativ geringen Lastmomenten, die über den Drehkopf 23 in die Gelenkarmanordnung 20 eingeleitet werden.

Das Prinzip der Handhabungsvorrichtung nach Fig. 8 entspricht vom Prinzip der Ausführung gemäß der Fig. 3a bis 3c.

Durch die Verwendung einer Kupplungsvorrichtung 69 wird insbesondere einen schneller Wechsel der am Drehkopf 23 aufgebauten Komponenten möglich, d.h. dass das Auslegerelement 26 mit der daran angeordneten Greifvorrichtung 27 mit geringem Montageaufwand angebracht werden kann, und sich eine Anpassung der Handhabungsvorrichtung 3 an sich ändernde Abmessungen und Eigenschaften der zu bearbeitenden Werkstücke 4 auch bei relativ kleinen Losgrößen wirtschaftlich durchführen lässt. Eine ähnliche Kupplungsvorrichtung kann vorteilhaft auch zwischen Auslegerelement 26 und Greifvorrichtung 27, insbesondere in Zusammenhang mit der Wendedreheinrichtung 45 angeordnet sein.

Die an der Handhabungsvorrichtung 3 ausgebildeten Schwenk- und Drehachsen, zwischen einzelnen Schwenkarmen, insbesondere jedoch auch die in einer Ausführungsform schwenkbare Lagerung des Auslegerelements 26 kann derart erfolgen, dass ein Drehachselement fliegend, jedoch aber auch beidseitig an zwei voneinander beabstandeten Lagerstellen des vorgelagerten Bewegungsgliedes gelagert ist.
Das Auslegerelement 26 ist aus Gewichtsgründen vorteilhaft in Form eines Hohlprofils mit kreisringförmigem oder rechteckigem Rohrquerschnitt ausgebildet, wobei der Hohlraum auch zur Durchführung von Leitungen genutzt werden kann. Insbesondere der von einer Wendedreheinrichtung 45 bewegte Auslegerteil, bzw. ein Anschlussstück zur Greifvorrichtung 27, ist wegen der Drehbewegung um die eigene Achse vorzugsweise mit kreisringförmigem Querschnitt ausgeführt.
Die Ausführungsbeispiele zeigen mögliche Ausführungsvarianten der Handhabungsvorrichtung 3 bzw. der Fertigungseinrichtung 1, wobei an dieser Stelle bemerkt sei, dass die Erfindung nicht auf die speziell dargestellten Ausführungsvarianten derselben eingeschränkt ist, sondern vielmehr auch innerhalb des Umfangs der folgenden Ansprüche, diverse Kombinationen der einzelnen Ausführungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt.

Der Ordnung halber sei abschließend darauf hingewiesen, dass zum besseren Verständnis des Aufbaus der Handhabungsvorrichtung 3 diese bzw. deren Bestandteile teilweise unmaßstäblich und/oder vergrößert und/oder verkleinert dargestellt wurden.
Die den eigenständigen erfinderischen Lösungen jeweils zugrunde liegende Aufgabe kann der Beschreibung entnommen werden.

## Patentansprüche

1. Handhabungsvorrichtung (3) zum Handhaben eines Werkstücks (4) an einer Biegepresse (2), umfassend mehrere aufeinander folgende, über Gelenke (19) miteinander gekoppelte Bewegungsglieder (17), insbesondere Gelenkarme (18), wobei ein Bewegungsglied (22) einen, um eine, mit einer Mittelachse (25) des Bewegungsgliedes (22) zumindest annähernd zusammenfallende Drehachse (24) drehbeweglichen Drehkopf (23) aufweist, sowie eine mit diesem verbundene Greifvorrichtung (27), die eine durch ein oder mehre Greifelemente (32) gebildete Greifzone (34) aufweist, mit der das Werkstück (4) gehalten werden kann, und wobei die Greifvorrichtung (27) über ein Auslegerelement (26) mit dem Drehkopf (23) verbunden ist, wodurch eine Mitte (35) der Greifzone (34) einen Abstand (36) zur Drehachse (24) aufweist, und eine Verstelleinrichtung (40) am Auslegerelement (26) mittels der die Greifvorrichtung (27) und die Greifzone (34) in ihrer Position und /oder ihrer Winkellage bezüglich des Auslegerelements (26) in zumindest zwei verschiedene Arbeitsstellungen verstellbar ist wobei die Verstelleinrichtung (40) einen Linearantrieb (57) zum Verschieben der Greifvorrichtung (27) entlang einer in einer zur Drehachse (24) rechtwinkeligen Ebene liegenden Linearführung (58) am Auslegerelement (26) umfasst, **dadurch gekennzeichnet, dass** die Mitte der Greifzone (34) einen Abstand zu einer zur Linearführung (58) parallelen und die Drehachse (24) enthaltenden Ebene aufweist.

2. Handhabungsvorrichtung (3) nach Anspruch 1, **dadurch gekennzeichnet, dass** eine Auslegerlängsachse (48) des Auslegerelements (26) die Drehachse (24) schneidet.

3. Handhabungsvorrichtung (3) nach Anspruch 1, **dadurch gekennzeichnet, dass** eine Auslegerlängsachse (48) des Auslegerelements (26) einen Auslegerabstand (63) zur Drehachse (24) aufweist.

4. Handhabungsvorrichtung (3) nach Anspruch 2 oder 3 , **dadurch gekennzeichnet, dass** die Auslegerlängsachse (48) in einer zur Drehachse (24) rechtwinkeligen Ebene angeordnet ist.

5. Handhabungsvorrichtung (3) nach einem der Ansprüche 2 bis 4, **dadurch gekennzeichnet, dass** eine Greifvorrichtungshauptachse (54) der Greifvorrichtung (27) quer zur Auslegerlängsachse (48) orientierbar ist und dadurch die Mitte (35) der Greifzone (34) in dieser Stellung einen Greifabstand (53) zur Auslegerlängsachse (48) aufweist.

6. Handhabungsvorrichtung (3) nach einem der Ansprüche 1 bis 5, **dadurch gekennzeichnet, dass** eine Breite (55) der Greifvorrichtung (27), gemessen quer zu einer Greifvorrichtungshauptachse (54) der Greifvorrichtung (27), kleiner ist, als eine Querschnittsabmessung (39) des Bewegungsgliedes (22) mit dem Drehkopf (23).

7. Handhabungsvorrichtung (3) nach Anspruch 6, **dadurch gekennzeichnet, dass** die Breite (55) der Greifvorrichtung (27) weniger als die Hälfte der Querschnittsabmessung (39) des Bewegungsgliedes (22) mit dem Drehkopf (23) beträgt.

8. Handhabungsvorrichtung (3) nach einem der Ansprüche 1 bis 7, **dadurch gekennzeichnet, dass** die Verstelleinrichtung (40) eine Zusatzdreheinrichtung (41) am Auslegerelement (26) zum Drehen der Greifvorrichtung (27) mit einer zur Drehachse (24) im Wesentlichen parallelen Zusatzdrehachse (42) umfasst.

9. Handhabungsvorrichtung (3) nach Anspruch 8, **dadurch gekennzeichnet, dass** die Greifvorrichtung (27) mittels der Zusatzdreheinrichtung (41) ausgehend von einer Referenzstellung um einen oder mehrere Winkelschritte von jeweils 90° drehbar ist.

10. Handhabungsvorrichtung (3) nach Anspruch 8, **dadurch gekennzeichnet, dass** die Greifvorrichtung (27) mittels der Zusatzdreheinrichtung (41) ausgehend von einer Referenzstellung im Wesentlichen stufenlos drehverstellbar ist.

11. Handhabungsvorrichtung (3) nach einem der Ansprüche 1 bis 10, **dadurch gekennzeichnet, dass** die Greifvorrichtung (27) mittels des Linearantriebs (57) in zwei bezüglich der Drehachse (24) im Wesentlichen spiegelsymmetrische Arbeitspositionen (61, 62) am Auslegerelement (26) verstellbar ist.

12. Handhabungsvorrichtung (3) nach einem der Ansprüche 1 bis 11, **dadurch gekennzeichnet, dass** der Linearantrieb (57) einen pneumatisch oder elektrisch antreibbaren Linearmotor umfasst.

13. Handhabungsvorrichtung (3) nach einem der Ansprüche 1 bis 12, **dadurch gekennzeichnet, dass** eine Auslegerlängsachse (48) des Auslegerelements (26) starr bezüglich des Drehkopfs (23) angeordnet ist.

14. Handhabungsvorrichtung (3) nach einem der Ansprüche 1 bis 13, **dadurch gekennzeichnet, dass** die Greifvorrichtung (27) mittels einer Wendedreheinrichtung (45) um eine zu einer Greifvorrichtungshauptachse (54) der Greifvorrichtung (27) parallele oder mit dieser zusammenfallende Wendeachse (47) relativ zum Auslegerelement (26) schwenkbar gelagert ist.

15. Handhabungsvorrichtung (3) nach Anspruch 14, **dadurch gekennzeichnet, dass** die Greifvorrichtung (27) mittels der Wendedreheinrichtung (45) ausgehend von einer Referenzwinkellage um Winkelschritte von jeweils 180° drehbar ist.

16. Handhabungsvorrichtung (3) nach einem der Ansprüche 1 bis 15, **dadurch gekennzeichnet, dass** die Greifvorrichtung (27) ein Magnetgreifelement (56) umfasst.

17. Handhabungsvorrichtung (3) nach einem der Ansprüche 1 bis 16, **dadurch gekennzeichnet, dass** die Greifvorrichtung (27) ein Zangengreifelement (52) umfasst.

18. Handhabungsvorrichtung (3) nach einem der Ansprüche 1 bis 17, **dadurch gekennzeichnet, dass** die Greifvorrichtung (33) ein Vakuumsaugelement (33) umfasst.

19. Handhabungsvorrichtung (3) nach einem der Ansprüche 1 bis 18, **dadurch gekennzeichnet, dass** das Auslegerelement (26) über eine Kupplungsvorrichtung (69) mit dem Drehkopf (23) verbunden ist.

20. Fertigungseinrichtung (1) umfassend eine Biegepresse (2) mit zwei relativ zueinander verstellbaren, mit Biegewerkzeugen (10, 11) versehenen Pressbalken (6, 7) und eine Handhabungsvorrichtung (3), **dadurch gekennzeichnet, dass** die Handhabungsvorrichtung (3) nach einem der Ansprüche 1 bis 19 ausgebildet ist.

21. Fertigungseinrichtung (1) nach Anspruch 20, **dadurch gekennzeichnet, dass** die Handhabungsvorrichtung (3) in Richtung einer Längsachse (16) der Pressbalken (6, 7) auf einer Führungsanordnung (15) verfahrbar gelagert ist.

22. Fertigungseinrichtung (1) nach Anspruch 20 oder 21, **dadurch gekennzeichnet, dass** die Handhabungsvorrichtung (3) ausgehend von einem Grundgestell (14) drei als Schwenkarme (18) ausgebildete Bewegungsglieder (17) umfasst, die mit Schwenkgelenken (19) zu einer Schwenkarmanordnung (20) verbunden sind und deren Schwenkgelenke (19) parallel zur Längsachse (16) der Pressbalken (6, 7) ausgerichtet sind und der Drehkopf (23) am dritten Schwenkarm (22) angeordnet ist.

## Claims

1. Manipulation device (3) for manipulating a workpiece (4) on a bending press (2), comprising multiple successive moving elements (17), particularly articulated arms (18), coupled to one another via articulated joints (19), wherein one moving element (22) has a rotary head (23) which is rotatable about a rotational axis (24) which at least approximately coincides with a centre axis (25) of the moving element (22), and comprising a gripping device (27) connected thereto having a gripping zone (34), formed by one or more gripping elements (32), by means of which the workpiece (4) may be held, and wherein the gripping device (27) is connected to the rotary head (23) via a boom element (26), as a result of which a midpoint (35) of the gripping zone (34) has a distance (36) from the rotational axis (24), and an adjustment device (40) on the boom element (26) by means of which the position and/or angular orientation of the gripping device (27) and the gripping zone (34) with respect to the boom element (26) may be adjusted in at least two different working positions, wherein the adjustment device (40) comprises a linear drive (57) for moving the gripping device (27) along a linear guide (58) on the boom element (26) lying in a plane perpendicular to the rotational axis (24), **characterized in that** the midpoint of the gripping zone (34) has a distance from a plane parallel to the linear guide (58) and containing the rotational axis (24).

2. Manipulation device (3) according to claim 1, **characterized in that** a boom longitudinal axis (48) of the boom element (26) intersects the rotational axis (24).

3. Manipulation device (3) according to claim 1, **characterized in that** a boom longitudinal axis (48) of the boom element (26) has a boom distance (63) from the rotational axis (24).

4. Manipulation device (3) according to claim 2 or 3, **characterized in that** the boom longitudinal axis (48) is arranged in a plane perpendicular to the rotational axis (24).

5. Manipulation device (3) according to one of claims 2 to 4, **characterized in that** a gripping device primary axis (54) of the gripping device (27) can be oriented transversely to the boom longitudinal axis (48) and, as a result, the midpoint (35) of the gripping zone (34) has a gripping distance (53) from the boom longitudinal axis (48) in this position.

6. Manipulation device (3) according to one of claims 1 to 5, **characterized in that** a width (55) of the gripping device (27), measured transversely to a gripping device primary axis (54) of the gripping device (27), is smaller than a cross-sectional dimension (39) of the moving element (22) having the rotary head (23).

7. Manipulation device (3) according to claim 6, **characterized in that** the width (55) of the gripping device (27) is less than half the cross-sectional dimension (39) of the moving element (22) having the rotary head (23).

8. Manipulation device (3) according to one of claims 1 to 7, **characterized in that** the adjustment device (40) includes an auxiliary rotation device (41) on the boom element (26) for rotation of the gripping device (27) about an auxiliary rotational axis (42) which is essentially parallel to the rotational axis (24).

9. Manipulation device (3) according to claim 8, **characterized in that** by means of the auxiliary rotation device (41) the gripping device (27) may be rotated by one or more angular increments of 90° each, starting from a reference position.

10. Manipulation device (3) according to claim 8, **characterized in that** by means of the auxiliary rotation device (41) the gripping device (27) is essentially infinitely rotationally adjustable, starting from a reference position.

11. Manipulation device (3) according to one of claims 1 to 10, **characterized in that** by use of the linear drive (57) the gripping device (27) may be moved into two working positions (61, 62) on the boom element (26) which are essentially mirror-symmetrical with respect to the rotational axis (24).

12. Manipulation device (3) according to one of claims 1 to 11, **characterized in that** the linear drive (57) comprises a pneumatically or electrically drivable linear motor.

13. Manipulation device (3) according to one of claims 1 to 12, **characterized in that** a boom longitudinal axis (48) of the boom element (26) is arranged rigidly with respect to the rotary head (23).

14. Manipulation device (3) according to one of claims 1 to 13, **characterized in that** the gripping device (27) is supported by means of a reversing rotation device (45) so as to be pivotable relative to the boom element (26), about a reversing axis (47) that is parallel to a gripping device primary axis (54) of the gripping device (27) or coincident with same.

15. Manipulation device (3) according to claim 14, **characterized in that** by use of the reversing rotation device (45) the gripping device (27) may be rotated by angular increments of 180° each, starting from a reference angular orientation.

16. Manipulation device (3) according to one of claims 1 to 15, **characterized in that** the gripping device (27) is a magnetic gripping element (56).

17. Manipulation device (3) according to one of claims 1 to 16, **characterized in that** the gripping device (27) is a tong gripping element (52).

18. Manipulation device (3) according to one of claims 1 to 17, **characterized in that** the gripping device (27) comprises a vacuum suction element (33).

19. Manipulation device (3) according to one of claims 1 to 18, **characterized in that** the boom element (26) is connected to the rotary head (23) via a coupling mechanism (69).

20. Production system (1) comprising a bending press (2) having two press crossbars (6, 7) which may be moved relative to one another and are provided with bending tools (10, 11), and a manipulation device (3), **characterized in that** the manipulation device (3) is constructed according to one of claims 1 to 19.

21. Production system (1) according to claim 20, **characterized in that** the manipulation device (3) is supported so as to be movable on a guide system (15) in the direction of a longitudinal axis (16) of the press crossbars (6, 7).

22. Production system (1) according to claim 20 or 21, **characterized in that** the manipulation device (3), starting from a base frame (14), comprises three moving elements (17) designed as swivel arms (18) which via swivel joints (19) are connected to form a swivel-arm system (20), with their swivel joints (19) oriented parallel to the longitudinal axis (16) of the press crossbars (6, 7) and with the rotary head (23) arranged on the third swivel arm (22).

## Revendications

1. Dispositif de manipulation (3) pour la manipulation d'une pièce (4) sur une presse plieuse (2), comprenant plusieurs organes de mouvement (17) successifs couplés entre eux par l'intermédiaire d'articulations (19), plus particulièrement des bras articulés (18), un organe de mouvement (22) comprenant une tête rotative (23) mobile en rotation autour d'un axe de rotation (24) coïncidant au moins approximativement avec un axe central (25) de l'organe de mouvement (22), ainsi qu'un dispositif de préhension (27) relié avec celui-ci, qui comprend une zone de préhension (34), constituée d'un ou plusieurs éléments de préhension (32), avec laquelle la pièce (4) peut être maintenue, et le dispositif de préhension (27) étant relié avec la tête rotative (23) par l'intermédiaire d'un élément de flèche (26), un centre (35) de la zone de préhension (34) présentant ainsi une distance (36) par rapport à l'axe de rotation (24), et un dispositif de réglage (40) sur l'élément de flèche (26), au moyen duquel le dispositif de préhension (27) et la zone de préhension (34) peut être réglé dans leur position et/ou leur position angulaire par rapport à l'élément de flèche (26) dans au moins deux positions de travail différentes, le dispositif de réglage (40) comprenant un dispositif d'entraînement linéaire (57) pour le coulissement du dispositif de préhension (27) le long d'un guidage linéaire (58), se trouvant le long d'un plan perpendiculaire à l'axe de rotation (24), sur l'élément de flèche (26), **caractérisé en ce que** le centre de la zone de préhension (34) présente une distance par rapport à un plan parallèle au guidage linéaire (58) et contenant l'axe de rotation (24).

2. Dispositif de manipulation (3) selon la revendication 1, **caractérisé en ce qu'**un axe longitudinal de flèche (48) de l'élément de flèche (26) coupe l'axe de rotation (24).

3. Dispositif de manipulation (3) selon la revendication 1, **caractérisé en ce qu'**un axe longitudinal de flèche (48) de l'élément de flèche (26) présente une distance de flèche (63) par rapport à l'axe de rotation (24).

4. Dispositif de manipulation (3) selon la revendication 2 ou 3, **caractérisé en ce qu'**un axe longitudinal de flèche (48) est disposé dans un plan perpendiculaire à l'axe de rotation (24).

5. Dispositif de manipulation (3) selon l'une des revendications 2 à 4, **caractérisé en ce qu'**un axe principal de dispositif de préhension (54) du dispositif de préhension (27) peut être orienté transversalement par rapport à l'axe longitudinal de flèche (48) et le centre (35) de la zone de préhension (34) comprend donc dans cette position une distance de préhension (53) par rapport à l'axe longitudinal de flèche (48).

6. Dispositif de manipulation (3) selon l'une des revendications 1 à 5, **caractérisé en ce qu'**une largeur (55) du dispositif de préhension (27), mesurée transversalement par rapport à un axe principal de dispositif de préhension (54) du dispositif de préhension (27), est inférieure à une dimension de section transversale (39) de l'organe de mouvement (22) avec la tête rotative (23).

7. Dispositif de manipulation (3) selon la revendication 6, **caractérisé en ce que** la largeur (55) du dispositif de préhension (27) est inférieure à la moitié de la dimension de section transversale (39) de l'organe de mouvement (22) avec la tête rotative (23).

8. Dispositif de manipulation (3) selon l'une des revendications 1 à 7, **caractérisé en ce que** le dispositif de réglage (40) comprend un dispositif de rotation supplémentaire (41) sur l'élément de flèche (26) pour la rotation du dispositif de préhension (27) avec un axe de rotation supplémentaire (42) globalement parallèle à l'axe de rotation (24).

9. Dispositif de manipulation (3) selon la revendication 8, **caractérisé en ce que** le dispositif de préhension (27) peut tourner, grâce au dispositif de rotation supplémentaire (41), à partir d'une position de référence, d'un ou plusieurs pas angulaires de 90° chacun.

10. Dispositif de manipulation (3) selon la revendication 8, **caractérisé en ce que** le dispositif de préhension (27) peut être réglé en rotation de manière globalement progressive grâce à un dispositif de rotation supplémentaire (41) à partir d'une position de référence.

11. Dispositif de manipulation (3) selon l'une des revendications 1 à 10, **caractérisé en ce que** le dispositif de préhension (27) peut être réglé, au moyen du dispositif d'entraînement linéaire (57), dans deux positions de travail (61, 62), globalement symétriques en miroir par rapport à l'axe de rotation (24), sur l'élément de flèche (26).

12. Dispositif de manipulation (3) selon l'une des revendications 1 à 11, **caractérisé en ce que** le dispositif d'entraînement linéaire (57) comprend un moteur linéaire pneumatique ou électrique.

13. Dispositif de manipulation (3) selon l'une des revendications 1 à 12, **caractérisé en ce qu'**un axe longitudinal de flèche (48) de l'élément de flèche (26) est disposé de manière rigide par rapport à la tête rotative (23).

14. Dispositif de manipulation (3) selon l'une des revendications 1 à 13, **caractérisé en ce que** le dispositif de préhension (27) est logé de manière pivotante par rapport à l'élément de flèche (26), au moyen d'un dispositif de rotation de retournement (45), autour d'un axe de retournement (47) parallèle à un axe principal de dispositif de préhension (54) du dispositif de préhension (27) ou coïncidant avec celui-ci.

15. Dispositif de manipulation (3) selon la revendication 14, **caractérisé en ce que** le dispositif de préhension (27) est rotatif, au moyen du dispositif de rotation de retournement (45) à partir d'une position angulaire de référence par pas angulaires de 180° chacun.

16. Dispositif de manipulation (3) selon l'une des revendications 1 à 15, **caractérisé en ce que** le dispositif de préhension (27) comprend un élément de préhension magnétique (56).

17. Dispositif de manipulation (3) selon l'une des revendications 1 à 16, **caractérisé en ce que** le dispositif de préhension (27) comprend un élément de préhension à pince (52).

18. Dispositif de manipulation (3) selon l'une des revendications 1 à 17, **caractérisé en ce que** le dispositif de préhension (27) comprend un élément d'aspiration à vide (33).

19. Dispositif de manipulation (3) selon l'une des revendications 1 à 18, **caractérisé en ce que** l'élément de flèche (26) est relié à la tête rotative (23) par l'intermédiaire d'un dispositif de couplage (69).

20. Dispositif de fabrication (1) comprenant une presse plieuse (2) avec deux barres de presse (6, 7) réglables l'une par rapport à l'autre, munies d'outils de pliage (10, 11) et un dispositif de manipulation (3), **caractérisé en ce que** le dispositif de manipulation (3) est conçu selon l'une des revendications 1 à 19.

21. Dispositif de fabrication (1) selon la revendication 20, **caractérisé en ce que** le dispositif de manipulation (3) est logé de manière mobile en direction d'un axe longitudinal (16) des barres de presse (6, 7) sur un dispositif de guidage (15).

22. Dispositif de fabrication (1) selon la revendication 20 ou 21, **caractérisé en ce que** le dispositif de manipulation (3) comprend, à partir d'un châssis de base (14), trois organes de guidage (17) conçus comme des bras pivotants (18), qui sont assemblés, avec des articulations pivotantes (19), en un dispositif à bras pivotants (20) et dont les articulations pivotantes (19) sont orientées parallèlement à l'axe longitudinal (16) des barres de presse (6, 7) et la tête rotative (23) est disposée sur le troisième bras pivotant (22).
